# EUROPEAN PATENT SPECIFICATION

(11) **EP 3 793 135 B1**
(45) Date of publication and mention of the grant of the patent: **25.03.2026**
(21) Application number: 19197099.5
(22) Date of filing: 12.09.2019
(51) Int. Cl.: H04L 47/70, H04L 41/022

(54) **METHOD FOR AN IMPROVED OPERATION OF A TELECOMMUNICATIONS NETWORK, THE TELECOMMUNICATIONS NETWORK BEING OPERATED AS A MULTI-OPERATOR ENABLED OR MULTI-PROVIDER ENABLED NETWORK, SYSTEM, PROGRAM AND COMPUTER-READABLE MEDIUM**
VERFAHREN ZUM VERBESSERTEN BETRIEB EINES TELEKOMMUNIKATIONSNETZWERKS, DAS ALS FÜR MULTI-OPERATOR ODER MULTI-PROVIDER AKTIVIERTES NETZWERK BETRIEBENE TELEKOMMUNIKATIONSNETZWERK, SYSTEM, PROGRAMM UND COMPUTERLESBARES MEDIUM
PROCÉDÉ D'AMÉLIORATION DU FONCTIONNEMENT D'UN RÉSEAU DE TÉLÉCOMMUNICATIONS, RÉSEAU DE TÉLÉCOMMUNICATIONS ÉTANT UTILISÉ EN TANT QUE RÉSEAU DE TÉLÉCOMMUNICATION ACTIVÉ MULTI-OPÉRATEURS OU MULTI-FOURNISSEURS, SYSTÈME, PROGRAMME ET SUPPORT LISIBLE PAR ORDINATEUR

(43) Date of publication of application: 17.03.2021
(73) Proprietor: Deutsche Telekom AG, 53113 Bonn (DE)
(72) Inventor: HAAG, Thomas, 63110 Rodgau (DE); KOLBE, Hans-Jörg, 64295 Darmstadt (DE); SCHNEIDER, Fabian, 69115 Heidelberg (DE); Szuppa, Sabine, 15859 Storkow (Mark) (DE)
(74) Representative: Schwöbel, Thilo K.

(56) References cited:
- US-A1- 2006 028 982

## Description

### BACKGROUND

The present invention relates a method for an improved operation of a telecommunications network, the telecommunications network being operated as a multi-operator enabled or multi-provider enabled network, and comprising a central office point of delivery and/or a provider infrastructure control center, wherein the central office point of delivery and/or the provider infrastructure control center is able to act or to be used as a wholebuy partner of a further telecommunications network and/or a corresponding broadband access network via or using a wholebuy interface between both partners.

Furthermore, the present invention relates to a telecommunications network for an improved operation of a telecommunications network, the telecommunications network being operated as a multi-operator enabled or multi-provider enabled network, and comprising a central office point of delivery and/or a provider infrastructure control center, wherein the central office point of delivery and/or the provider infrastructure control center is able to act or to be used as a wholebuy partner of a further telecommunications network and/or a corresponding broadband access network via or using a wholebuy interface between both partners.

Additionally, the present invention relates to a system for an improved operation of a telecommunications network, the telecommunications network being operated as a multi-operator enabled or multi-provider enabled network, and comprising a central office point of delivery and/or a provider infrastructure control center,
wherein the system furthermore comprises a further telecommunications network and/or a corresponding broadband access network, wherein the central office point of delivery and/or the provider infrastructure control center is able to act or to be used as a wholebuy partner of the further telecommunications network and/or the corresponding broadband access network via or using a wholebuy interface between both partners.

Furthermore, the present invention relates to a program comprising a computer readable program code, and a computer-readable medium.

The exchange of packetized information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

The present invention generally relates to the area of aggregation networks linking remote or central access nodes to a backbone network or core network of the telecommunications network, e.g. broadband access network platforms such as 5G or CORD (Central Office Re-architected as a Data Center).

Typically in such architectures, multiple network termination ports are aggregated by an access node (e.g. a DSLAM device (Digital Subscriber Line Access Multiplexer) or an OLT (Optical Line Terminal) device) and interconnected to a subscriber termination device via a layer-2 infrastructure such as a datacenter fabric.

In accordance with regulatory requirements, there is an increasing number of customers or end users being provided with the access network services by or via a first network (or a first telecommunications network or a network operated by a first network operator) and further communication services being provided by or via a second network (or a second telecommunications network or a network operated by a second network operator). In such a scenario, wholesale operations or wholesale contacts between the telecommunications networks or network operators occur more and more frequently. Typically, the network (or network operator) providing the access network services is considered the wholesale partner, whereas the network (or network operator) providing the other communications services to its clients or customers (and buys the access network services, on behalf of its clients or customers) is considered the wholebuy partner.

One and the same network or telecommunications network might act both as wholesale partner (with respect to some users connected via this network), as well as as wholebuy partner (for users being provided an access via or using another telecommunications network's access network).

In traditional legacy networks, wholebuy is terminated at an aggregation switch, and wholesale is terminated at a broadband network gateway, BNG, providing a lesser degree of flexibility regarding wholesale and wholebuy operations and/or functionality.

Document US 2006/0028982 A1 disclosed a method and system for admission control in a regional/access network based on implicit protocol detection. Specifically, a network node (e.g., in a RAN or access network) snoops user traffic to detect the protocol being used and determines whether there are sufficient network resources and/or if policy criteria are met to admit the traffic. However, the challenges arising from the application of protocol detection in the context of wholebuy / wholesale are not addressed.

### SUMMARY

An object of the present invention is to provide a technically simple, effective and cost effective solution for an improved operation of a telecommunications network being operated as a multi-operator enabled or multi-provider enabled network, and comprising a central office point of delivery and/or a provider infrastructure control center, wherein the central office point of delivery and/or the provider infrastructure control center is able to act or to be used as a wholebuy partner of a further telecommunications network and/or a corresponding broadband access network via or using a wholebuy interface between both partners. A further object of the present invention is to provide a corresponding telecommunications network, a corresponding system, and a corresponding network of a service provider.

The object of the present invention is achieved by a method for an improved operation of a telecommunications network , the telecommunications network being operated as a multi-operator enabled or multi-provider enabled network, and comprising a central office point of delivery and/or a provider infrastructure control center, wherein the central office point of delivery and/or the provider infrastructure control center is adapted to act or to be used as a wholebuy partner of a further telecommunications network and/or a corresponding broadband access network via or using a wholebuy interface between both partners, wherein the network or network operator providing the access network services is considered the wholesale partner, whereas the network or network operator providing the other communication services to its clients or customers and buys the access network services, on behalf of its clients or customers is considered the wholebuy partner, the central office point of delivery and/or the provider infrastructure control center providing at least one communication service to a client device or customer premises equipment, the client device (51) or customer premises equipment being connected or linked to the central office point of delivery and/or the provider infrastructure control center via the further telecommunications network and/or via the corresponding broadband access network,wherein the telecommunications network or the central office point of delivery furthermore comprises a protocol detection function, wherein the wholebuy interface is an A10 interface, wherein, especially, the wholebuy interface is an A10-ASP, A10 access service provider, interface,wherein in order to provide the at least one communication service to the client device or customer premises equipment, the method comprises the following steps:
-- in a first step, the client device or customer premises equipment transmits user plane data to the central office point of delivery and/or the provider infrastructure control center , the user plane data being transmitted via the wholebuy interface between, on the one hand, the central office point of delivery and/or the provider infrastructure control center, and, on the other hand, the further telecommunications network and/or the corresponding broadband access network,
-- in a second step, subsequent to the first step, the protocol detection function analyses the user plane data of the client device or customer premises equipment, and determines whether to generate and/or generates control information to be transmitted to the provider infrastructure control center,
wherein the telecommunications network or the central office point of delivery comprises a plurality of service edge nodes, wherein a specific service edge node of the plurality of service edge nodes provides a service edge functionality to the client device or to the customer premises equipment, wherein the configuration of the specific service edge node is adapted to be modified, under control of the provider infrastructure control center , and dependent on the control information generated by the protocol detection function.

It is thereby advantageously possible according to the present invention to provide a solution to multi-operator infrastructure sharing, i.e. the infrastructure is shared among multiple operators, wherein the wholebuy partner is able to provide at least one communication service to a client device or customer premises equipment, only based on user plane data, and to be able to generate control information (or control message) in order to provide the communications services.

According to the present invention, a method to efficiently realize especially wholebuy functionality is provided. According to a further aspect, or according to a further alternative variant of the present invention, an efficient implementation of both wholebuy and wholesale is provided.

Typically, wholebuy and wholesale require different functionalities, even though the same interface, especially an A10 interface, is used. Therefore, the implementation of wholebuy and wholesale functionalities typically require different designs regarding at least the software configuration of computing nodes (or network nodes) realizing these functionalities. Hence, while both functionalities might be realized on the same hardware support, different software configurations (or different images) are typically needed in order to realize wholebuy functionalities on the one hand, and wholesale functionalities on the other hand.

According to the present invention, and especially in case the telecommunications network is acting as the wholebuy partner towards a further telecommunications network, it is especially advantageous that the communication services are able to be provided, by the telecommunications network as a wholebuy partner, to a client or an end user being connected to the telecommunications network via (typically the access network of) the further telecommunications network (acting as wholesale partner), and without a control plane connection between the telecommunications network and the client or end user.

It is especially advantageous that the wholebuy and/or wholesale functionality is able to be changed (or switched) and/or modified and configured via software defined network functionalities within or used by the telecommunications network.

Especially, the present invention solves the problem of multiple purpose driven handoff devices and solves this by one design loaded by software.

Hence, according to the present invention, it is advantageously possible that an improved operation of a telecommunications network is possible, the telecommunications network being operated as a multi-operator enabled or multi-provider enabled network, and typically comprises a central office point of delivery and/or a provider infrastructure control center. Especially, the central office point of delivery and/or the provider infrastructure control center is able to act or to be used as a wholebuy partner of the further telecommunications network and/or a corresponding broadband access network via or using a wholebuy interface between both partners. Thus, the central office point of delivery and/or the provider infrastructure control center is able to provide at least one communication service to a client device or customer premises equipment, which is connected or linked to the central office point of delivery and/or the provider infrastructure control center via the further telecommunications network and/or via the corresponding broadband access network.

In order to provide the at least one communication service to the client device or customer premises equipment, the method comprises the steps of:
-- in a first step, the client device or customer premises equipment transmits user plane data to the central office point of delivery and/or the provider infrastructure control center, the user plane data being transmitted via the wholebuy interface between, on the one hand, the central office point of delivery and/or the provider infrastructure control center, and, on the other hand, the further telecommunications network and/or the corresponding broadband access network,
-- in a second step, subsequent to the first step, the protocol detection function analyses the user plane data of the client device or customer premises equipment, and determines whether to generate and/or generates control information (or control message) to be transmitted to the provider infrastructure control center.

The telecommunications network according to the present invention might be a fixed-line telecommunications network or a mobile communication network but preferably is a telecommunications network having both aspects (or parts) of a fixed-line telecommunications network (or being a fixed-line telecommunications network in or regarding such parts) and aspects (or parts) of a mobile communication network (or being a mobile communication network in or regarding such parts); such networks are also known under the term fixed-mobile-convergence networks (FMC networks).

Furthermore, it is advantageously possible and preferred according to the present invention that the telecommunications network or the central office point of delivery comprises a plurality of service edge nodes, wherein a specific service edge node of the plurality of service edge nodes provides a service edge functionality to the client device or to the customer premises equipment, wherein the configuration of the specific service edge node is able to be modified, under control of the provider infrastructure control center, and dependent on the control information (or control message) generated by the protocol detection function.

By means of modifying the configuration of the specific service edge node dependent on the control information (or control message) generated by the protocol detection function, it is advantageously possible according to the present invention, to efficiently and flexibly configure the specific service edge node providing a service edge functionality to the client device or to the customer premises equipment.

Furthermore, and according to an alternative embodiment of the present invention, it is preferred that the central office point of delivery and/or the provider infrastructure control center is further adapted to act or to be used as a wholesale partner of a further telecommunications network and/or a corresponding broadband access network via or using a wholesale interface between both partners, the central office point of delivery and/or the provider infrastructure control center providing at least one access service to a further client device or a further customer premises equipment, the further client device or further customer premises equipment being connected or linked to the central office point of delivery and/or the provider infrastructure control center, wherein a further specific service edge node of the plurality of service edge nodes provides a service edge functionality to the further client device or to the further customer premises equipment, wherein the configuration of the specific service edge node differs from the configuration of the further specific service edge node, and wherein both the specific service edge node and the further specific service edge node is able to be realized on the same hardware node.

Thereby, it is advantageously possible to provide for an efficient realization of the present invention, wherein the same hardware node (or computing node) is able to flexibly support either the configuration of the specific service edge node or the configuration of the further specific service edge node, or wherein the same hardware node (or computing node) is able to flexibly support both the configuration of the specific service edge node and the configuration of the further specific service edge node. Especially, it is advantageously possible according to the present invention that an autodetection functionality is realized within such a hardware node such that by means of an initial signalization, it is possible to determine whether the hardware node (or a part thereof) is configured for providing the functionality of either the specific service edge node, or of the further specific service edge node. Thereby, it is advantageously possible to provide an increased level of flexibility to the (wholesale and/or wholebuy) interface between the telecommunications network, and the further telecommunications network.

According to a further preferred embodiment of the present invention, the provider infrastructure control center of the telecommunications network or of the central office point of delivery controls whether a service edge node of the plurality of service edge nodes is configured to provide a service edge functionality either to the client device or to the customer premises equipment or to the further client device or to the further customer premises equipment.

Thereby, it is advantageously possible to easily and effectively realize the inventive method of an improved operation of a telecommunications network, wherein the telecommunications network is operated as a multi-operator enabled or multi-provider enabled network.

According to a further embodiment of the present invention, the protocol detection function analyses - in the second step - the user plane data of the client device or customer premises equipment such that a certain protocol event - especially a discovery signal -, in the user plane data, triggers the generation of control information (or control message) to be transmitted to the provider infrastructure control center, wherein the protocol detection function especially analyses the user plane data of the client device or customer premises equipment prior to establishing a connection or a user session with the client device or customer premises equipment, i.e. it analyses the user plane data of the client device or customer premises equipment in view of initializing an access session (towards the client device or customer premises equipment) and/or a user connection or user session with the client device or customer premises equipment.

By means of the protocol detection function analyzing the user plane data of the client device or customer premises equipment, it is advantageously possible - even without a control plane connection - to generate control information (or control message) to be transmitted to the provider infrastructure control center.
The protocol detection function especially detects certain protocol events (control information within user plane data) in the user plane data (or user plane traffic). Especially, signals - such as discovery signals - are detected by the protocol detection function, especially in order to allow for the establishment of an access session (as a prerequisite to the establishment of a user connection or user session). Furthermore especially, this detection (by the protocol detection function) is done (or occurs) prior to establishing a connection or a user session (such as an established IP session) with the client device or customer premises equipment, i.e. the protocol detection function especially analyses the user plane data in view of detecting the initialization of an access session and/or the initialization of a connection or user session with the client device or customer premises equipment (and, hence, especially not during the established user connection or user session; i.e. once such a user connection or user session is established (involving the transmission (and verification and approval) of authentication information such as user name and password, or other credentials), the protocol detection function especially does not analyze the user plane traffic any more). Hence (as this detection by the protocol detection function is done (or occurs) prior to establishing the access session and/or the user connection or user session (such as an established IP session) with the client device or customer premises equipment, especially based exclusively on layer 2 (data link layer) actions with only the port identifier or a port information being known to the protocol detection function or to the provider infrastructure control center), at the time of this detection, by the protocol detection function, the user (or the client device or customer premises equipment) is unknown to the provider infrastructure control center (as no authentication information, such as user name and password, or other credentials, has been transmitted or exchanged yet, and, hence, the user is only switchable within the central office point of delivery, not routable by means of an IP address) - in this situation, the provider infrastructure control center typically only has a logical or physical port information (or logical or physical line information, especially transmitted as part of the protocol event, or discovery signal, detected by the protocol detection function) and the indication (or request) that a user session shall be established.
It is especially advantageous according to the present invention that (especially in case that the user plane data of the client device or customer premises equipment is analyzed prior to establishing the access session and/or user connection or user session) the user session or user connection (between the telecommunications network and the client device or customer premises equipment) is able to be established or at least its initiation started or triggered without any (user plane, or customer-related or customer-specific) authentication information being required.

According to still a further embodiment of the present invention, at least one of the following protocol events are detected by the protocol detection function in case of the point-to-point protocol over ethernet, PPPoE, being used between, on the one hand, the client device or customer premises equipment, and, on the other hand, the telecommunications network or the central office point of delivery:
-- the existence, as part of the user plane data, of one or a plurality of ethernet frames having a discovery stage PPPoE ethertype, especially having a value of 0x8863, especially a PADI-frame, PPPoE Active Discovery Initiation frame, and/or a PADR-frame, PPPoE Active Discovery Request, and/or a PADT-frame, PPPoE Active Discovery Termination,
-- the existence, as part of the user plane data, of specific a link control protocol, LCP, event.

According to a further embodiment of the present invention, at least one of the following protocol events are detected by the protocol detection function in case of the internet protocol version 4, IPv4, or internet protocol version 6, IPv6, being used between, on the one hand, the client device or customer premises equipment, and, on the other hand, the telecommunications network or the central office point of delivery:
-- the existence, as part of the user plane data, of one or a plurality of dynamic host configuration protocol, DHCP, discover messages,
-- the existence, as part of the user plane data, of one or a plurality of dynamic host configuration protocol, DHCP, request messages.

It is thereby advantageously possible to generate control information (or control message) to be transmitted to the provider infrastructure control center, even without a control plane connection.

According to still a further embodiment of the present invention, the wholebuy interface and/or the wholesale interface is an A10 interface, wherein, especially, the wholebuy interface is an A10-ASP, A10 access service provider, interface, and/or wherein, especially, the wholesale interface is an A10-NSP, A10 network service provider, interface.

Thereby, it is advantageously possible to easily and effectively implement the inventive method.

Furthermore, the present invention relates to a system for an improved operation of a telecommunications network, the telecommunications network being operated as a multi-operator enabled or multi-provider enabled network, and comprising a central office point of delivery and/or a provider infrastructure control center, wherein the system furthermore comprises a further telecommunications network and/or a corresponding broadband access network, wherein the central office point of delivery and/or the provider infrastructure control center is able to act or to be used as a wholebuy partner of the further telecommunications network and/or the corresponding broadband access network via or using a wholebuy interface between both partners, the central office point of delivery and/or the provider infrastructure control center providing at least one communication service to a client device or customer premises equipment, the client device or customer premises equipment being connected or linked to the central office point of delivery and/or the provider infrastructure control center via the further telecommunications network and/or via the corresponding broadband access network, wherein the telecommunications network or the central office point of delivery furthermore comprises a protocol detection function, wherein the system, in order to provide the at least one communication service to the client device or customer premises equipment, is configured such that:
-- user plane data, transmitted by the client device or customer premises equipment, is received to the central office point of delivery and/or the provider infrastructure control center, the user plane data being transmitted via the wholebuy interface between, on the one hand, the central office point of delivery and/or the provider infrastructure control center, and, on the other hand, the further telecommunications network and/or the corresponding broadband access network,
-- the protocol detection function analyses the user plane data of the client device or customer premises equipment, and determines whether to generate and/or generates control information (or control message) to be transmitted to the provider infrastructure control center.

Still additionally, the present invention relates to a program comprising a computer readable program code which, when executed on a computer and/or on a central office point of delivery and/or on a provider infrastructure control center, or in part on a central office point of delivery and/or in part on a provider infrastructure control center, causes the computer and/or the central office point of delivery and/or the provider infrastructure control center to perform a method according to the present invention.

Furthermore, the present invention relates to a computer-readable medium comprising instructions which when executed on a computer and/or on a central office point of delivery and/or on a provider infrastructure control center, or in part on a central office point of delivery and/or in part on a provider infrastructure control center, causes the computer and/or the central office point of delivery and/or the provider infrastructure control center to perform a method according to the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention, having a broadband access network with a central office point of delivery.
Figure 2 schematically illustrates the telecommunications network and a further telecommunications network being in connection or cooperating using an interface connecting both telecommunications network such that a client or user equipment or customer premises equipment connected to the access network of the further telecommunications network might be served by the telecommunications network (acting as wholebuy partner) or vice versa (then the telecommunications network acting as wholesale partner).
Figure 3 schematically illustrates a typical example of a central office point of delivery and its main components.
Figures 4 and 5 schematically illustrate details regarding especially the wholebuy and/or wholesale interface between the telecommunications network and the further telecommunications network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

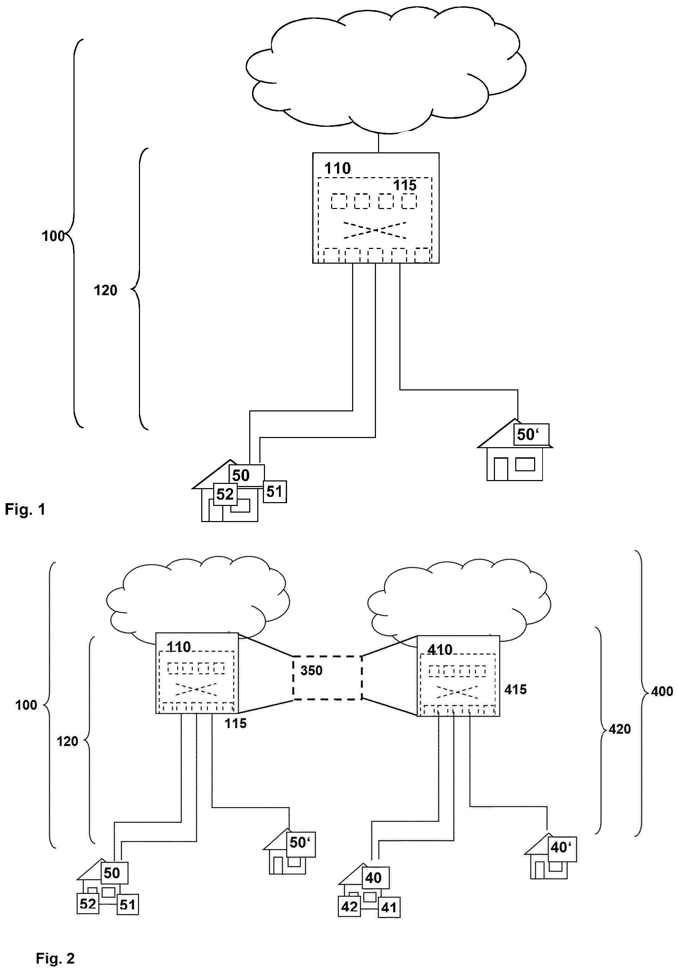

In Figure 1, a telecommunications network 100 according to the present invention is schematically shown, having - preferably - at least a fixed line part. A mobile (or cellular) part might be present as well, as part of the telecommunications network 100, but is not specifically illustrated in Figure 1. User equipments or client devices 51, 52 are connected to the telecommunications network 100 by means of a (broadband) access network 120. The telecommunications network 100 comprises, especially as part of the broadband access network 120, at least one logical or physical central office point of delivery 110 that is preferably realized within a data center and that is especially handling different access requirements, especially different access possibilities, of the client devices 51, 52 to network functionalities provided by the telecommunications network 100 or via the telecommunications network 100. The client devices 51, 52 are typically connected to the logical or physical central office point of delivery 110 by means of a customer premises equipment device 50, 50' or by means of a customer premises equipment functionality that might be built in the client devices 51, 52. Preferably but not necessarily, the central office point of delivery 110 comprises a switching fabric 115 comprising a plurality of spine network nodes and typically also a plurality of leaf network nodes which are not explicitly represented in Figure 1.

Figure 2 schematically illustrates the telecommunications network 100 and a further telecommunications network 400 being in connection or cooperating using an interface 350 connecting both telecommunications networks 100, 400 such that a client or user equipment 51, 52 or customer premises equipment 50, 50' connected to the access network 420 of the further telecommunications network 400 might be served by the telecommunications network 100 (acting as wholebuy partner) or vice versa (then the telecommunications network 100 acting as wholesale partner). The interface 350 especially is a colocation area, realizing a wholebuy interface (and/or a wholesale interface) between both partners, i.e. between the telecommunications network 100 and the further telecommunications network 400.

In a manner analogous to the telecommunications network 100, also the further telecommunications network 400 has - preferably - at least a fixed line part, and a mobile (or cellular) part might be present as well, as part of the further telecommunications network 400, but is not specifically illustrated in Figure 2. User equipments or client devices 41, 42 are connected to the further telecommunications network 400 by means of a further (broadband) access network 420. The further telecommunications network 400 comprises, especially as part of the further broadband access network 420, at least one logical or physical further central office point of delivery 410 that is preferably realized within a data center and that is especially handling different access requirements, especially different access possibilities, of the client devices 41, 42 to network functionalities provided by (or via) the further telecommunications network 400 or provided by (or via) the telecommunications network 100, the telecommunications network 100 in this case acting a wholebuy partner to the further telecommunications network 400. The client devices 41, 42 are typically connected to the logical or physical further central office point of delivery 410 by means of further customer premises equipment devices 40, 40' or by means of a customer premises equipment functionality that might be built in the client devices 41, 42. Preferably but not necessarily, the further central office point of delivery 410 comprises a further switching fabric 415 comprising a plurality of spine network nodes and typically also a plurality of leaf network nodes which are not explicitly represented in Figure 2.

Typically both telecommunications network 100 and the further telecommunications network 400 comprises, especially as part of the broadband access network 120 (i.e. the further broadband access network 420 for the further telecommunications network 400), at least one logical or physical central office point of delivery 110 (i.e. at least one logical or physical further central office point of delivery 410 for the further telecommunications network 400) that is preferably realized within a data center and that is especially handling different access requirements, especially different access possibilities, of the client devices 41, 42, 51, 52, respectively.

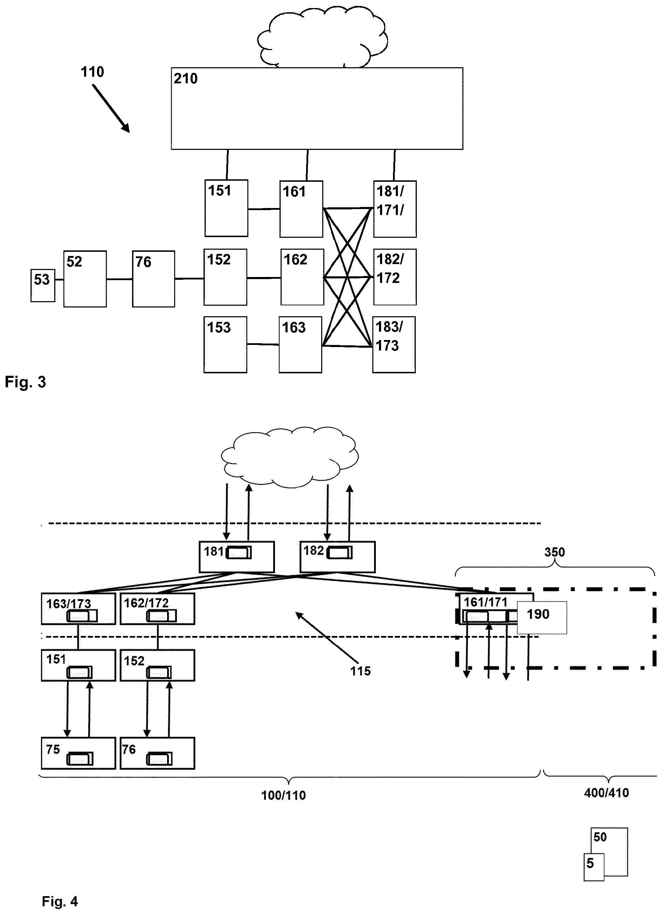

The typical architecture of a central office point of delivery and of its components is shown in Figure 3. Exemplarily, the central office point of delivery 110 and its components (rather than the further central office point of delivery 410) is described; however, the further central office point of delivery 410 typically comprises analogous components and/or has an analogous architecture.
The central office point of delivery 110 is part of the broadband access network 120 and especially comprises - besides a provider infrastructure control center 210 - a plurality of line termination nodes 151, 152, 153. Typically, each of the line termination nodes 151, 152, 153 has one or a plurality of access node ports (not specifically illustrated in Figure 3). In the example represented in Figure 3, the broadband access network 120 comprises three line termination nodes, a first line termination node 151, a second line termination node 152, and a third line termination node 153. In addition to the provider infrastructure control center 210 and the plurality of line termination nodes 151, 152, 153, the central office point of delivery 110 also comprises a plurality of service edge nodes 171, 172, 173, wherein a specific line termination node 151 of the plurality of line termination nodes is connectable - using an access node port of the specific line termination node 151- to typically only one specific network termination node 75 (of a plurality of network termination nodes that are, however, not shown in Figure 3).

In the context of the present invention, in order to separate the "specific" or considered entities from the other entities of the same kind within the broadband access network 120, the first line termination node 151 is also called the specific line termination node 151, the network termination node 75 connected to the first line termination node 151 is also called the specific network termination node 75, and the first service edge node 171 or the first service edge functionality 171 is also called the specific service edge node 171 (as the second service edge node 172 or the second service edge functionality 172 is also called the further specific service edge node 172.

The line termination nodes 151, 152, 153 might be provided to support different access technologies to a home gateway or customer premises equipment 50. In the exemplary embodiment shown in Figure 3, the first line termination node 151 might be taken as a line termination node supporting to be connected to an optical network, especially a passive optical network (PON), typically a so-called optical line terminal (OLT) or optical line terminal device. In such a situation, a (further) client device 53 is connected to the telecommunications network 100 (i.e. to the second (or also called specific) line termination node 152) via the (further) customer premises equipment 52 (or further home gateway device 52) and a second network termination node 76. The functionality of the (further) customer premises equipment 52 (or home gateway device 52) and the functionality of the second network termination node 76 might also be integrated in one device or "box". Even the functionality of the (further) client device 53, the functionality of the (further) customer premises equipment 52 (or home gateway device 52) and the functionality of the second network termination node 76 might be integrated in one device or "box". Nevertheless, these functionalities are represented in Figure 3 as separated functionalities. In Figure 3, only one (further) home gateway device 52 (or (further) customer premises equipment 52) (i.e. a specific customer premises equipment), and only one (further) client device 53, and only one network termination node 76 (i.e. a specific network termination node) are shown. However, also the second and/or third line termination nodes 152, 153 might be connected to corresponding network termination nodes and customer premises equipments (not represented in Figure 3). In case of the line termination nodes 151, 152, 153 having a plurality of access node ports, also a plurality of network termination nodes are able to be connected to one line termination node 151, 152, 153 and/or (in case that a network termination node has a plurality of ports also a plurality of customer premises equipments are able to be connected to one network termination node.

Hence, Figure 3 schematically shows a typical setup of the central office point of delivery 110. The central office point of delivery 110 and/or the broadband access network 120 comprises the provider infrastructure control center 210 (also called controller node 210). The (further) specific customer premises equipment 52 (or (further) specific home gateway 52) is connected via the specific optical network terminal (or the specific network termination node 76) and the specific optical line terminal (OLT MAC) (or the specific line termination node 151) to a leaf switch 161 (of a plurality of leaf switches 161, 162, 163) which is dual-homed at a plurality of spine switches 181, 182, 183. In the exemplary embodiment shown in Figure 2, it is assumed that the plurality of spine switches 181, 182, 183 also have or provide a functionality of a service edge or a service edge user plane function or functionality, especially for plain internet access built-in; hence, these nodes are represented, in Figure 3, by means of reference signs 181/171, 182/172, 183/173 denoting both functionalities. However, according to a variant, the spine switch functionality 181, 182, 183 might be separated from the service edge functionality 171, 172, 173 and vice versa, i.e. the spine switch function or functionality may as well reside inside a different node (not represented in Figure 3) in the central office point of delivery 110 (than the service edge functionality). Hence, reference signs 171, 172, 173 refer to the service edge functionality (or to the plurality of service edge nodes), and in case that the service edge functionality is separated from the spine switch functionality, the corresponding network nodes are separated, e.g. an additional layer of network nodes are present between the leaf switches 161, 162, 163, and the service edge nodes 171, 172, 173, 174 in Figure 3, or, alternatively, the leaf switches 161, 162, 163 also provide the service edge functionality 171, 172, 173 (however, this last alternative is not represented in Figure 3). The controller or controller node 210 for the access domain - which controls the central office point of delivery 110 - typically has an access domain repository or repository node (so-called A4 repository) which holds all devices within the passive optical network, including the connected optical network terminal devices (network termination nodes) and/or home gateways. A service edge control plane (or service edge control plane node) might be residing in the controller node 210 or be located separately from the controller node 210.

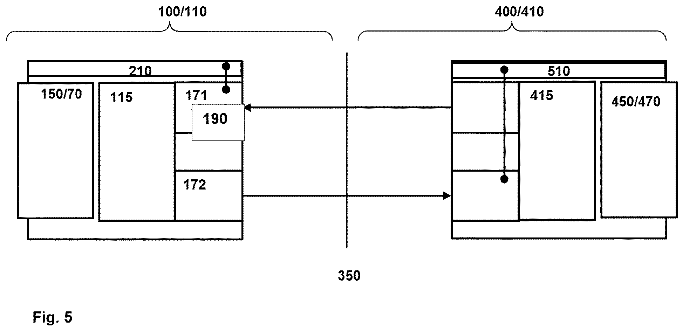

In Figures 4 and 5, details regarding the wholebuy and/or wholesale interface 350 between the telecommunications network 100 and the further telecommunications network 400 are schematically shown.

Figure 4 shows the central office point of delivery 110 of the telecommunications network 100 and the interface 350 towards the further telecommunications network 400 (or between both telecommunications networks), i.e. especially towards the further central office point of delivery 410 of the further telecommunications network 400. The interface 350 is typically realized by means of a colocation space which is also denoted by reference sign 350 in both figures 2 and 4. In the exemplary embodiment or representation shown in Figure **4****,** the central office point of delivery 110 comprises again a plurality of network termination nodes 75, 76, a plurality of line termination nodes 151, 152, and a plurality of service edge nodes 171, 172, 173. The switching fabric 115 is realized by means of a plurality of leaf nodes 161, 162, 163, and a plurality of spine nodes 181, 182. According to the exemplary embodiment and representation of Figure 4, the service edge nodes or service edge functionality 171, 172, 173 (terminating retail customers and/or the corresponding communication sessions) resides on the leaf nodes 161, 162, 163. The handoff and delivery to the interface 350 (towards the further telecommunications network 400), i.e. wholebuy and wholesale is terminated on a dedicated HW being part of the colocation 350 (or colocation area of both networks 100, 400). Typically, this requires both the feature of wholesale service edge functionality and the feature of wholebuy service edge functionality to be potentially realized on the same hardware node (or compute node) of the network, dependent on the purpose of the required handoff interface.
In conventionally known telecommunications networks, wholebuy is typically terminated at an aggregation switch, and wholesale is terminated at a broadband network gateway (BNG), i.e. typically statically configured by EMS.
According to the present invention, it is advantageously possible to overcome the problem of multiple purpose driven handoff devices by means of using one standard hardware support to provide the basis for the different functionalities (i.e. especially the wholesale service edge functionality and the wholebuy service edge functionality), and to implement the different functionalities, and the corresponding scaling, by loading different software realizations (of these functionalities) or different instances of software realizations (such as programs or app(lication)s on either one network node (of such a standard hardware support) or on a plurality of network nodes (of such a standard hardware support).

In the exemplary embodiment shown in Figure 4, the central office point of delivery 110 and/or the provider infrastructure control center 210 is able to act or to be used as a wholebuy partner of the further telecommunications network 400 (and/or as a wholebuy partner of its corresponding broadband access network 420) via or using the wholebuy interface 350 between both partners. Thereby, the central office point of delivery 110 and/or the provider infrastructure control center 210 are able to provide at least one communication service to the client device 51 or to the customer premises equipment 50 being connected or linked, to the central office point of delivery 110 and/or to the provider infrastructure control center 210, via the further telecommunications network 400 and/or via the corresponding broadband access network 420. This is schematically shown in Figure 4 by means of the client device 51 or the customer premises equipment 50 being located to the right hand side of the telecommunications network 100, indicating that the client device 51 or the customer premises equipment 50 is connected via the further telecommunications network 400, i.e. the telecommunications network 100 is in this situation a wholebuy partner of the further telecommunications network 400 regarding the client device 51 or the customer premises equipment 50.

According to the present invention, the telecommunications network 100 or the central office point of delivery 110 comprises a protocol detection function 190 - especially as part of the specific service edge node 171 (of the plurality of service edge nodes 171, 172, 173) that provides the service edge functionality to the client device 51 or the customer premises equipment 50. According to the present invention at least one communication service is provided to the client device 51 or to the customer premises equipment 50 by means of (or via)
-- the client device 51 or customer premises equipment 50 transmitting (via the wholebuy interface between, on the one hand, the central office point of delivery 110 and/or the provider infrastructure control center 210, and, on the other hand, the further telecommunications network 400 and/or the corresponding broadband access network 420) user plane data (or user plane traffic) to the central office point of delivery 110 and/or to the provider infrastructure control center 210, and
-- the protocol detection function 190 analyzing this user plane data (i.e. the user plane data (or user plane traffic) transmitted by the client device 51 or customer premises equipment 50), and determining whether to generate and/or generates control information (especially in view of defining routing information, or in view of defining control information (or a control message) that is called to define a routing path, especially within the switching fabric, i.e. especially in view of establishing a connection or a user session with the client device 51 or customer premises equipment 50) to be transmitted to the provider infrastructure control center 210. Especially, it is thereby advantageously possible, according to the present invention, to provide a new mechanism for the setup of (or for establishing) client sessions (or for the setup of access sessions) by means of using the protocol detection function 190, especially prior to establishing the connection or the user session with the client device 51 or customer premises equipment 50.
It is especially preferred according to the present invention that during the second step, the protocol detection function 190 analyses the user plane data of the client device 51 or customer premises equipment 50 such that a certain protocol event (or control information within user plane data) - especially a discovery signal -, in the user plane data, triggers the generation of control information (or control message) to be transmitted to the provider infrastructure control center 210, especially in view of eventually establishing a user connection or user session with the client device 51 or customer premises equipment 50 as a result of such control information (or control message) transmitted (by the protocol detection function 190 or the network node hosting the protocol detection function 190) to the provider infrastructure control center 210. Typically, the establishment of the user connection or user session subsequently (i.e. after the control information (or control message) having been transmitted to the provider infrastructure control center 210) also requires the transmission, by the provider infrastructure control center 210, of a routing information (or routing command, especially by means of thereby defining a routing path, especially within the switching fabric 115) in view of actually initializing the access session (towards the client device 51 or customer premises equipment 50) and/or the user connection or user session with the client device 51 or customer premises equipment 50.
By means of the protocol detection function 190 analyzing the user plane data of the client device 51 or customer premises equipment 50, it is advantageously possible - even without a control plane connection - to start (or to trigger) the establishment of the user connection or user session by means of generating the control information (or control message to be transmitted to the provider infrastructure control center 210). Thereby, the protocol detection function 190 especially detects certain protocol events (control information within user plane data) in the user plane data (or user plane traffic) especially prior to the user connection or user session and/or access session being established. Especially, signals - such as discovery signals - or control information within user plane data are detected by the protocol detection function 190, especially in order to allow for the establishment of the access session (as a prerequisite to the establishment of a user connection or user session). Hence, this detection (by the protocol detection function 190) especially occurs prior to establishing the user connection or the user session (such as an established IP session) with the client device 51 or customer premises equipment 50, and especially the user (or the client device 51 or customer premises equipment 50) is unknown to the provider infrastructure control center 210 (as no authentication information, such as user name and password, or other credentials, has been transmitted or exchanged yet), only logical or physical port information (or logical or physical line information, especially transmitted as part of the protocol event, or discovery signal, detected by the protocol detection function), and an indication (or request) that a user session shall be established is available to the provider infrastructure control center 210 in this situation.
Hence, the protocol detection function 190 (especially realized inside the corresponding service edge node or service edge functionality), e.g., especially detects a "first sign of life" (or a discovery signal), coming from the client device 51 or customer premises equipment 50 on the user plane, in order to setup (or to activate) the connection. Hence, any kind of protocol being used on the user plane (e.g. such as the point-to-point-protocol, PPP, or dynamic host configuration protocol, DHCP, or any access protocol like ethernet EAP or other authentication protocols) are able to be used according to the present invention, i.e. with the protocol detection function 190 detecting such a "first sign of life" (or a discovery signal), coming, from the client device 51 or customer premises equipment 50 on the user plane, towards the service edge node or service edge functionality 171. It should be understood that such a detection of control information within such user plane data (or user plane traffic), especially of such a discovery signal, is not identical to performing a pattern recognition based on user plane data (or user plane traffic) while a session is established.
According to the present invention, there are several examples of such discovery signal communication detected by the protocol detection function 190:
According to a first group of alternatives, in case of using the point-to-point protocol over ethernet, PPPoE, protocol (being used between, on the one hand, the client device 51 or customer premises equipment 50, and, on the other hand, the telecommunications network 100 or the central office point of delivery 110):
-- the existence, as part of the user plane data, of one or a plurality of ethernet frames having a discovery stage PPPoE ethertype, especially having a value of 0x8863, especially a PADI-frame, PPPoE Active Discovery Initiation frame, and/or a PADR-frame, PPPoE Active Discovery Request,
-- the existence, as part of the user plane data, of a specific link control protocol, LCP, event, and
according to a second group of alternatives, in case of using the internet protocol version 4, IPv4, or internet protocol version 6, IPv6, (being used between, on the one hand, the client device 51 or customer premises equipment 50, and, on the other hand, the telecommunications network 100 or the central office point of delivery 110):
-- the existence, as part of the user plane data, of one or a plurality of dynamic host configuration protocol, DHCP, discover messages,
-- the existence, as part of the user plane data, of one or a plurality of dynamic host configuration protocol, DHCP, request messages.
Further alternatives or examples of such discovery signal communication being detected by the protocol detection function 190 include:
-- especially in case of a business access line, using of ethernet EAP or of other authentication protocols, especially the respective discovery signals,
-- even the use of a MAC address (albeit questionable for security reasons if used alone), especially in connection with a hardware identification information, e.g. transmitted using DHCP Opt 61,
   might be used as a kind of discovery signal detected by the protocol detection function 190.

In Figure 5, a further representation of details regarding especially the wholebuy and/or wholesale interface 350 between the telecommunications network 100 and the further telecommunications network 400 is schematically shown. Figure 5 shows on the left hand side a part of the telecommunications network 100 especially the central office point of delivery 110, and on the right hand side a part of the further telecommunications network 400, especially the further central office point of delivery 410. In the central office point of delivery 110, the plurality of network termination nodes 75, 76, and line termination nodes 151, 152, 153, i.e. the access ports, are collectively represented by reference signs 150/70. In addition to the switching fabric 115, the provider infrastructure control center 210 or controller node 210 is represented together with a first service edge node 171 (or service edge functionality 171) , also called specific service edge node 171, and a second service edge node 172 (or service edge functionality 172), also called further specific service edge node 172. Likewise, in the further central office point of delivery 410, the plurality of network termination nodes, and line termination nodes, i.e. the access ports, are collectively represented by reference signs 450/470. In addition to the further switching fabric 415, the further provider infrastructure control center 510 or further controller node 510 (of the further central office point of delivery 410) is represented together with service edge nodes or service edge functionalities (of the further telecommunications network 400) without a reference sign. According to the exemplary situation represented in Figure 5, the first service edge node 171, or specific service edge node 171, serves the client device 51 or customer premises equipment 50 (not represented in Figure 5) connected to the further telecommunications network 400, hence the first telecommunications network 100 (or specific service edge node 171) acting as wholebuy partner over the interface 350, and the second service edge node 172, or further specific service edge node 172, serves a further client device 53 or further customer premises equipment 52 (not represented in Figure 5) connected to the telecommunications network 100, hence the first telecommunications network 100 (or further specific service edge node 172) acting as wholesale partner over the interface 350 towards the further telecommunications network 400 providing the corresponding service edge node or service edge functionality for the further client device 53 or further customer premises equipment 52.

## Claims

1. Method for an improved operation of a telecommunications network (100), the telecommunications network (100) being operated as a multi-operator enabled or multi-provider enabled network, and comprising a central office point of delivery (110) and/or a provider infrastructure control center (210),
wherein the central office point of delivery (110) and/or the provider infrastructure control center (210) is adapted to act or to be used as a wholebuy partner of a further telecommunications network (400) and/or a corresponding broadband access network (420) via or using a wholebuy interface between both partners, wherein the network or network operator providing the access network services is considered the wholesale partner, whereas the network or network operator providing the other communication services to its clients or customers and buys the access network services, on behalf of its clients or customers is considered the wholebuy partner, the central office point of delivery (110) and/or the provider infrastructure control center (210) providing at least one communication service to a client device (51) or customer premises equipment (50), the client device (51) or customer premises equipment (50) being connected or linked to the central office point of delivery (110) and/or the provider infrastructure control center (210) via the further telecommunications network (400) and/or via the corresponding broadband access network (420),
wherein the telecommunications network (100) or the central office point of delivery (110) furthermore comprises a protocol detection function (190), wherein the wholebuy interface is an A10 interface, wherein, especially, the wholebuy interface is an A10-ASP, A10 access service provider, interface,wherein in order to provide the at least one communication service to the client device (51) or customer premises equipment (50), the method comprises the following steps:
-- in a first step, the client device (51) or customer premises equipment (50) transmits user plane data to the central office point of delivery (110) and/or the provider infrastructure control center (210), the user plane data being transmitted via the wholebuy interface between, on the one hand, the central office point of delivery (110) and/or the provider infrastructure control center (210), and, on the other hand, the further telecommunications network (400) and/or the corresponding broadband access network (420),
-- in a second step, subsequent to the first step, the protocol detection function (190) analyses the user plane data of the client device (51) or customer premises equipment (50), and determines whether to generate and/or generates control information to be transmitted to the provider infrastructure control center (210), wherein the telecommunications network (100) or the central office point of delivery (110) comprises a plurality of service edge nodes, wherein a specific service edge node (171) of the plurality of service edge nodes provides a service edge functionality to the client device (51) or to the customer premises equipment (50), wherein the configuration of the specific service edge node (171) is adapted to be modified, under control of the provider infrastructure control center (210), and dependent on the control information generated by the protocol detection function (190).

2. Method according to claim 1, wherein the central office point of delivery (110) and/or the provider infrastructure control center (210) is further adapted to act or to be used as a wholesale partner of a further telecommunications network (400) and/or a corresponding broadband access network (420) via or using a wholesale interface between both partners, the central office point of delivery (110) and/or the provider infrastructure control center (210) providing at least one access service to a further client device (53) or a further customer premises equipment (52), the further client device (53) or further customer premises equipment (52) being connected or linked to the central office point of delivery (110) and/or the provider infrastructure control center (210), wherein the wholesale interface is an A10 interface, wherein, especially, the wholesale interface is an A10-NSP, A10 network service provider, interface, wherein a further specific service edge node (172) of the plurality of service edge nodes provides a service edge functionality to the further client device (53) or to the further customer premises equipment (52), wherein the configuration of the specific service edge node (171) differs from the configuration of the further specific service edge node (172), and wherein both the specific service edge node (171) and the further specific service edge node (172) is able to be realized on the same hardware node.

3. Method according to one of the preceding claims, wherein the provider infrastructure control center (210) of the telecommunications network (100) or of the central office point of delivery (110) controls whether a service edge node of the plurality of service edge nodes is configured to provide a service edge functionality either to the client device (51) or to the customer premises equipment (50) or to the further client device (53) or to the further customer premises equipment (52).

4. Method according to one of the preceding claims, wherein - in the second step - the protocol detection function (190) analyses the user plane data of the client device (51) or customer premises equipment (50) such that a certain protocol event - especially a discovery signal -, in the user plane data, triggers the generation of control information to be transmitted to the provider infrastructure control center (210), wherein the protocol detection function (190) especially analyses the user plane data of the client device (51) or customer premises equipment (50) prior to establishing a connection or a user session with the client device (51) or customer premises equipment (50).

5. Method according to one of the preceding claims, wherein at least one of the following protocol events are detected by the protocol detection function (190) in case of the point-to-point protocol over ethernet, PPPoE, being used between, on the one hand, the client device (51) or customer premises equipment (50), and, on the other hand, the telecommunications network (100) or the central office point of delivery (110):
-- the existence, as part of the user plane data, of one or a plurality of ethernet frames having a discovery stage PPPoE ethertype, especially having a value of 0x8863, especially a PADI-frame, PPPoE Active Discovery Initiation frame, and/or a PADR-frame, PPPoE Active Discovery Request,
-- the existence, as part of the user plane data, of specific a link control protocol, LCP, event.

6. Method according to one of the preceding claims, wherein at least one of the following protocol events are detected by the protocol detection function (190) in case of the internet protocol version 4, IPv4, or internet protocol version 6, IPv6, being used between, on the one hand, the client device (51) or customer premises equipment (50), and, on the other hand, the telecommunications network (100) or the central office point of delivery (110):
-- the existence, as part of the user plane data, of one or a plurality of dynamic host configuration protocol, DHCP, discover messages,
-- the existence, as part of the user plane data, of one or a plurality of dynamic host configuration protocol, DHCP, request messages.

7. System for an improved operation of a telecommunications network (100), the telecommunications network (100) being operated as a multi-operator enabled or multi-provider enabled network, and comprising a central office point of delivery (110) and/or a provider infrastructure control center (210),
wherein the system furthermore comprises a further telecommunications network (400) and/or a corresponding broadband access network (420),
wherein the central office point of delivery (110) and/or the provider infrastructure control center (210) is adapted to act or to be used as a wholebuy partner of the further telecommunications network (400) and/or the corresponding broadband access network (420) via or using a wholebuy interface between both partners, wherein the network or network operator providing the access network services is considered the wholesale partner, whereas the network or network operator providing the other communication services to its clients or customers and buys the access network services, on behalf of its clients or customers is considered the wholebuy partner, the central office point of delivery (110) and/or the provider infrastructure control center (210) providing at least one communication service to a client device (51) or customer premises equipment (50), the client device (51) or customer premises equipment (50) being connected or linked to the central office point of delivery (110) and/or the provider infrastructure control center (210) via the further telecommunications network (400) and/or via the corresponding broadband access network (420), wherein the wholebuy interface is an A10 interface, wherein, especially, the wholebuy interface is an A10-ASP, A10 access service provider, interface,
wherein the telecommunications network (100) or the central office point of delivery (110) furthermore comprises a protocol detection function (190),
wherein the system, in order to provide the at least one communication service to the client device (51) or customer premises equipment (50), is configured such that:
-- user plane data, transmitted by the client device (51) or customer premises equipment (50), is received to the central office point of delivery (110) and/or the provider infrastructure control center (210), the user plane data being transmitted via the wholebuy interface between, on the one hand, the central office point of delivery (110) and/or the provider infrastructure control center (210), and, on the other hand, the further telecommunications network (400) and/or the corresponding broadband access network (420),
-- the protocol detection function (190) analyses the user plane data of the client device (51) or customer premises equipment (50), and determines whether to generate and/or generates control information to be transmitted to the provider infrastructure control center (210),
wherein the telecommunications network (100) or the central office point of delivery (110) comprises a plurality of service edge nodes, wherein a specific service edge node (171) of the plurality of service edge nodes provides a service edge functionality to the client device (51) or to the customer premises equipment (50), wherein the configuration of the specific service edge node (171) is adapted to be modified, under control of the provider infrastructure control center (210), and dependent on the control information generated by the protocol detection function (190).

8. Program comprising a computer readable program code which, when executed on a computer and/or on a central office point of delivery (110) and/or on a provider infrastructure control center (210), or in part on a central office point of delivery (110) and/or in part on a provider infrastructure control center (210), causes the computer and/or the central office point of delivery (110) and/or the provider infrastructure control center (210) to perform a method according one of claims 1 to 7.

9. Computer-readable medium comprising instructions which when executed on a computer and/or on a central office point of delivery (110) and/or on a provider infrastructure control center (210), or in part on a central office point of delivery (110) and/or in part on a provider infrastructure control center (210), causes the computer and/or the central office point of delivery (110) and/or the provider infrastructure control center (210) to perform a method according one of claims 1 to 7.

## Patentansprüche

1. Verfahren für einen verbesserten Betrieb eines Telekommunikationsnetzes (100), wobei das Telekommunikationsnetz (100) als ein Multi-Operator-fähiges Netz oder Multi-Provider-fähiges Netz betrieben wird und eine zentrale Übergabestelle (110) und/oder ein Anbieter-Infrastruktur-Kontrollzentrum (210) umfasst,
wobei die zentrale Übergabestelle (110) und/oder das Anbieter-Infrastruktur-Kontrollzentrum (210) angepasst ist, als Wholebuy-Partner eines weiteren Telekommunikationsnetzes (400) und/oder eines entsprechenden Breitband-Zugangsnetzes (420) über oder unter Verwendung einer Wholebuy-Schnittstelle zwischen beiden Partnern zu agieren oder genutzt zu werden, wobei das Netz oder der Netzbetreiber, der die Zugangsnetzdienste bereitstellt, als Wholesale-Partner betrachtet wird, wohingegen das Netz oder der Netzbetreiber, der die anderen Kommunikationsdienste seinen Klienten oder Kunden bereitstellt und die Zugangsnetzdienste im Auftrag seiner Klienten oder Kunden kauft, als Wholebuy-Partner betrachtet wird, wobei die zentrale Übergabestelle (110) und/oder das Anbieter-Infrastruktur-Kontrollzentrum (210) mindestens einen Kommunikationsdienst einem Client-Gerät (51) oder Kundenendgerät (50) bereitstellt, wobei das Client-Gerät (51) oder Kundenendgerät (50) mit der zentralen Übergabestelle (110) und/oder dem Anbieter-Infrastruktur-Kontrollzentrum (210) über das weitere Telekommunikationsnetz (400) und/oder über das entsprechende Breitband-Zugangsnetz (420) verbunden oder verknüpft ist,
wobei das Telekommunikationsnetz (100) oder die zentrale Übergabestelle (110) ferner eine Protokollerkennungsfunktion (190) umfasst, wobei die Wholebuy-Schnittstelle eine A10-Schnittstelle ist, wobei insbesondere die Wholebuy-Schnittstelle eine A10-ASP-, Zugangsdienst-Anbieter-, Schnittstelle ist, wobei, um den mindestens einen Kommunikationsdienst dem Client-Gerät (51) oder Kundenendgerät (50) bereitzustellen, das Verfahren die folgenden Schritte umfasst:
-- in einem ersten Schritt überträgt das Client-Gerät (51) oder Kundenendgerät (50) Nutzerebenen-Daten an die zentrale Übergabestelle (110) und/oder das Anbieter-Infrastruktur-Kontrollzentrum (210), wobei die Nutzerebenen-Daten über die Wholebuy-Schnittstelle zwischen einerseits der zentralen Übergabestelle (110) und/oder dem Anbieter-Infrastruktur-Kontrollzentrum (210) und andererseits dem weiteren Telekommunikationsnetz (400) und/oder dem entsprechenden Breitband-Zugangsnetz (420) übertragen werden,
-- in einem zweiten Schritt, nachfolgend auf den ersten Schritt, analysiert die Protokollerkennungsfunktion (190) die Nutzerebenen-Daten des Client-Geräts (51) oder Kundenendgeräts (50) und bestimmt, ob Steuerinformation zu generieren ist und/oder generiert Steuerinformation, die an das Anbieter-Infrastruktur-Kontrollzentrum (210) zu übertragen ist,
wobei das Telekommunikationsnetz (100) oder die zentrale Übergabestelle (110) eine Mehrzahl von Service-Edge-Knoten umfasst, wobei ein spezifischer Service-Edge-Knoten (171) der Mehrzahl von Service-Edge-Knoten eine Service-Edge-Funktionalität dem Client-Gerät (51) oder dem Kundenendgerät (50) bereitstellt, wobei die Konfiguration des spezifischen Service-Edge-Knotens (171) angepasst ist, unter Kontrolle des Anbieter-Infrastruktur-Kontrollzentrums (210) und in Abhängigkeit von der durch die Protokollerkennungsfunktion (190) generierten Steuerinformation modifiziert zu werden.

2. Verfahren nach Anspruch 1, wobei die zentrale Übergabestelle (110) und/oder das Anbieter-Infrastruktur-Kontrollzentrum (210) ferner angepasst ist, als Wholesale-Partner eines weiteren Telekommunikationsnetzes (400) und/oder eines entsprechenden Breitband-Zugangsnetzes (420) über oder unter Verwendung einer Wholesale-Schnittstelle zwischen beiden Partnern zu agieren oder genutzt zu werden, wobei die zentrale Übergabestelle (110) und/oder das Anbieter-Infrastruktur-Kontrollzentrum (210) mindestens einen Zugangsdienst einem weiteren Client-Gerät (53) oder einem weiteren Kundenendgerät (52) bereitstellt, wobei das weitere Client-Gerät (53) oder weitere Kundenendgerät (52) mit der zentralen Übergabestelle (110) und/oder dem Anbieter-Infrastruktur-Kontrollzentrum (210) verbunden oder verknüpft ist, wobei die Wholesale-Schnittstelle eine A10-Schnittstelle ist, wobei insbesondere die Wholesale-Schnittstelle eine A10-NSP-, Netzwerkdienst-Anbieter-, Schnittstelle ist, wobei ein weiterer spezifischer Service-Edge-Knoten (172) der Mehrzahl von Service-Edge-Knoten eine Service-Edge-Funktionalität dem weiteren Client-Gerät (53) oder dem weiteren Kundenendgerät (52) bereitstellt, wobei die Konfiguration des spezifischen Service-Edge-Knotens (171) sich von der Konfiguration des weiteren spezifischen Service-Edge-Knotens (172) unterscheidet, und wobei sowohl der spezifische Service-Edge-Knoten (171) als auch der weitere spezifische Service-Edge-Knoten (172) in der Lage ist, auf demselben Hardware-Knoten realisiert zu werden.

3. Verfahren nach einem der vorhergehenden Ansprüche, wobei das Anbieter-Infrastruktur-Kontrollzentrum (210) des Telekommunikationsnetzes (100) oder der zentralen Übergabestelle (110) steuert, ob ein Service-Edge-Knoten der Mehrzahl von Service-Edge-Knoten konfiguriert ist, eine Service-Edge-Funktionalität entweder dem Client-Gerät (51) oder dem Kundenendgerät (50) oder dem weiteren Client-Gerät (53) oder dem weiteren Kundenendgerät (52) bereitzustellen.

4. Verfahren nach einem der vorhergehenden Ansprüche, wobei - im zweiten Schritt - die Protokollerkennungsfunktion (190) die Nutzerebenen-Daten des Client-Geräts (51) oder Kundenendgeräts (50) derart analysiert, dass ein bestimmtes Protokollereignis - insbesondere ein Erkennungssignal - in den Nutzerebenen-Daten die Generierung von Steuerinformation auslöst, die an das Anbieter-Infrastruktur-Kontrollzentrum (210) zu übertragen ist,
wobei die Protokollerkennungsfunktion (190) insbesondere die Nutzerebenen-Daten des Client-Geräts (51) oder Kundenendgeräts (50) vor dem Aufbau einer Verbindung oder einer Nutzersitzung mit dem Client-Gerät (51) oder Kundenendgerät (50) analysiert.

5. Verfahren nach einem der vorhergehenden Ansprüche, wobei mindestens eines der folgenden Protokollereignisse durch die Protokollerkennungsfunktion (190) erkannt wird, falls das Point-to-Point-Protokoll über Ethernet, PPPoE, zwischen einerseits dem Client-Gerät (51) oder Kundenendgerät (50) und andererseits dem Telekommunikationsnetz (100) oder der zentralen Übergabestelle (110) verwendet wird:
-- die Existenz, als Teil der Nutzerebenen-Daten, eines oder mehrerer Ethernet-Frames mit einem Discovery-Stage-PPPoE-Ethertype, insbesondere mit einem Wert von 0x8863, insbesondere ein PADI-Frame, PPPoE Active Discovery Initiation Frame, und/oder ein PADR-Frame, PPPoE Active Discovery Request,
-- die Existenz, als Teil der Nutzerebenen-Daten, eines spezifischen Link Control Protocol-, LCP-, Ereignisses.

6. Verfahren nach einem der vorhergehenden Ansprüche, wobei mindestens eines der folgenden Protokollereignisse durch die Protokollerkennungsfunktion (190) erkannt wird, falls das Internet-Protokoll Version 4, IPv4, oder Internet-Protokoll Version 6, IPv6, zwischen einerseits dem Client-Gerät (51) oder Kundenendgerät (50) und andererseits dem Telekommunikationsnetz (100) oder der zentralen Übergabestelle (110) verwendet wird:
-- die Existenz, als Teil der Nutzerebenen-Daten, einer oder mehrerer Dynamic Host Configuration Protocol-, DHCP-, DHCP-Discover-Nachrichten,
-- die Existenz, als Teil der Nutzerebenen-Daten, einer oder mehrerer Dynamic Host Configuration Protocol-, DHCP-, DHCP-Request-Nachrichten.

7. System für einen verbesserten Betrieb eines Telekommunikationsnetzes (100), wobei das Telekommunikationsnetz (100) als ein Multi-Operator-fähiges Netz oder Multi-Provider-fähiges Netz betrieben wird und eine zentrale Übergabestelle (110) und/oder ein Anbieter-Infrastruktur-Kontrollzentrum (210) umfasst,
wobei das System ferner ein weiteres Telekommunikationsnetz (400) und/oder ein entsprechendes Breitband-Zugangsnetz (420) umfasst,
wobei die zentrale Übergabestelle (110) und/oder das Anbieter-Infrastruktur-Kontrollzentrum (210) angepasst ist, als Wholebuy-Partner des weiteren Telekommunikationsnetzes (400) und/oder des entsprechenden Breitband-Zugangsnetzes (420) über oder unter Verwendung einer Wholebuy-Schnittstelle zwischen beiden Partnern zu agieren oder genutzt zu werden, wobei das Netz oder der Netzbetreiber, der die Zugangsnetzdienste bereitstellt, als Wholesale-Partner betrachtet wird, wohingegen das Netz oder der Netzbetreiber, der die anderen Kommunikationsdienste seinen Klienten oder Kunden bereitstellt und die Zugangsnetzdienste im Auftrag seiner Klienten oder Kunden kauft, als Wholebuy-Partner betrachtet wird, wobei die zentrale Übergabestelle (110) und/oder das Anbieter-Infrastruktur-Kontrollzentrum (210) mindestens einen Kommunikationsdienst einem Client-Gerät (51) oder Kundenendgerät (50) bereitstellt, wobei das Client-Gerät (51) oder Kundenendgerät (50) mit der zentralen Übergabestelle (110) und/oder dem Anbieter-Infrastruktur-Kontrollzentrum (210) über das weitere Telekommunikationsnetz (400) und/oder über das entsprechende Breitband-Zugangsnetz (420) verbunden oder verknüpft ist, wobei die Wholebuy-Schnittstelle eine A10-Schnittstelle ist, wobei insbesondere die Wholebuy-Schnittstelle eine A10-ASP-, Zugangsdienst-Anbieter-, Schnittstelle ist,
wobei das Telekommunikationsnetz (100) oder die zentrale Übergabestelle (110) ferner eine Protokollerkennungsfunktion (190) umfasst,
wobei das System, um den mindestens einen Kommunikationsdienst dem Client-Gerät (51) oder Kundenendgerät (50) bereitzustellen, derart konfiguriert ist, dass:
-- Nutzerebenen-Daten, übertragen durch das Client-Gerät (51) oder Kundenendgerät (50), an die zentrale Übergabestelle (110) und/oder das Anbieter-Infrastruktur-Kontrollzentrum (210) empfangen werden, wobei die Nutzerebenen-Daten über die Wholebuy-Schnittstelle zwischen einerseits der zentralen Übergabestelle (110) und/oder dem Anbieter-Infrastruktur-Kontrollzentrum (210) und andererseits dem weiteren Telekommunikationsnetz (400) und/oder dem entsprechenden Breitband-Zugangsnetz (420) übertragen werden,
-- die Protokollerkennungsfunktion (190) die Nutzerebenen-Daten des Client-Geräts (51) oder Kundenendgeräts (50) analysiert und bestimmt, ob Steuerinformation zu generieren ist und/oder Steuerinformation generiert, die an das Anbieter-Infrastruktur-Kontrollzentrum (210) zu übertragen ist,
wobei das Telekommunikationsnetz (100) oder die zentrale Übergabestelle (110) eine Mehrzahl von Service-Edge-Knoten umfasst, wobei ein spezifischer Service-Edge-Knoten (171) der Mehrzahl von Service-Edge-Knoten eine Service-Edge-Funktionalität dem Client-Gerät (51) oder dem Kundenendgerät (50) bereitstellt, wobei die Konfiguration des spezifischen Service-Edge-Knotens (171) angepasst ist, unter Kontrolle des Anbieter-Infrastruktur-Kontrollzentrums (210) und in Abhängigkeit von der durch die Protokollerkennungsfunktion (190) generierten Steuerinformation modifiziert zu werden.

8. Programm, umfassend einen computerlesbaren Programmcode, welcher, wenn er auf einem Computer und/oder auf einer zentralen Übergabestelle (110) und/oder auf einem Anbieter-Infrastruktur-Kontrollzentrum (210) oder zum Teil auf einer zentralen Übergabestelle (110) und/oder zum Teil auf einem Anbieter-Infrastruktur-Kontrollzentrum (210) ausgeführt wird, den Computer und/oder die zentrale Übergabestelle (110) und/oder das Anbieter-Infrastruktur-Kontrollzentrum (210) veranlasst, ein Verfahren nach einem der Ansprüche 1 bis 7 durchzuführen.

9. Computerlesbares Medium, umfassend Anweisungen, welche, wenn sie auf einem Computer und/oder auf einer zentralen Übergabestelle (110) und/oder auf einem Anbieter-Infrastruktur-Kontrollzentrum (210) oder zum Teil auf einer zentralen Übergabestelle (110) und/oder zum Teil auf einem Anbieter-Infrastruktur-Kontrollzentrum (210) ausgeführt werden, den Computer und/oder die zentrale Übergabestelle (110) und/oder das Anbieter-Infrastruktur-Kontrollzentrum (210) veranlassen, ein Verfahren nach einem der Ansprüche 1 bis 7 durchzuführen.

## Revendications

1. Procédé pour un fonctionnement amélioré d'un réseau de télécommunications (100), le réseau de télécommunications (100) étant exploité en tant que réseau multi-opérateur ou réseau multi-fournisseur, et comprenant un point de livraison du bureau central (110) et/ou un centre de contrôle de l'infrastructure du fournisseur (210),
dans lequel le point de livraison du bureau central (110) et/ou le centre de contrôle de l'infrastructure du fournisseur (210) est adapté pour agir ou être utilisé en tant que partenaire wholebuy d'un autre réseau de télécommunications (400) et/ou d'un réseau d'accès à large bande correspondant (420) via ou en utilisant une interface wholebuy entre les deux partenaires, dans lequel le réseau ou l'opérateur de réseau fournissant les services de réseau d'accès est considéré comme le partenaire de gros, tandis que le réseau ou l'opérateur de réseau fournissant les autres services de communication à ses clients et achetant les services de réseau d'accès au nom de ses clients est considéré comme le partenaire wholebuy, le point de livraison du bureau central (110) et/ou le centre de contrôle de l'infrastructure du fournisseur (210) fournissant au moins un service de communication à un appareil client (51) ou équipement client (50), l'appareil client (51) ou l'équipement client (50) étant connecté ou lié au point de livraison du bureau central (110) et/ou au centre de contrôle de l'infrastructure du fournisseur (210) via l'autre réseau de télécommunications (400) et/ou via le réseau d'accès à large bande correspondant (420),
dans lequel le réseau de télécommunications (100) ou le point de livraison du bureau central (110) comprend en outre une fonction de détection de protocole (190), dans lequel l'interface wholebuy est une interface A10, dans lequel, en particulier, l'interface wholebuy est une interface A10-ASP, fournisseur de services d'accès, dans lequel, afin de fournir le au moins un service de communication à l'appareil client (51) ou à l'équipement client (50), le procédé comprend les étapes suivantes :
-- dans une première étape, l'appareil client (51) ou l'équipement client (50) transmet des données du plan utilisateur au point de livraison du bureau central (110) et/ou au centre de contrôle de l'infrastructure du fournisseur (210), les données du plan utilisateur étant transmises via l'interface wholebuy entre, d'une part, le point de livraison du bureau central (110) et/ou le centre de contrôle de l'infrastructure du fournisseur (210), et, d'autre part, l'autre réseau de télécommunications (400) et/ou le réseau d'accès à large bande correspondant (420),
-- dans une deuxième étape, postérieure à la première étape, la fonction de détection de protocole (190) analyse les données du plan utilisateur de l'appareil client (51) ou de l'équipement client (50), et détermine s'il faut générer et/ou génère une information de contrôle à transmettre au centre de contrôle de l'infrastructure du fournisseur (210),
dans lequel le réseau de télécommunications (100) ou le point de livraison du bureau central (110) comprend une pluralité de nœuds de bordure de service, dans lequel un nœud de bordure de service spécifique (171) de la pluralité de nœuds de bordure de service fournit une fonctionnalité de bordure de service à l'appareil client (51) ou à l'équipement client (50), dans lequel la configuration du nœud de bordure de service spécifique (171) est adaptée pour être modifiée, sous le contrôle du centre de contrôle de l'infrastructure du fournisseur (210), et en fonction de l'information de contrôle générée par la fonction de détection de protocole (190).

2. Procédé selon la revendication 1, dans lequel le point de livraison du bureau central (110) et/ou le centre de contrôle de l'infrastructure du fournisseur (210) est en outre adapté pour agir ou être utilisé en tant que partenaire de gros d'un autre réseau de télécommunications (400) et/ou d'un réseau d'accès à large bande correspondant (420) via ou en utilisant une interface wholesale entre les deux partenaires, le point de livraison du bureau central (110) et/ou le centre de contrôle de l'infrastructure du fournisseur (210) fournissant au moins un service d'accès à un autre appareil client (53) ou un autre équipement client (52), l'autre appareil client (53) ou l'autre équipement client (52) étant connecté ou lié au point de livraison du bureau central (110) et/ou au centre de contrôle de l'infrastructure du fournisseur (210), dans lequel l'interface wholesale est une interface A10, dans lequel, en particulier, l'interface wholesale est une interface A10-NSP, fournisseur de services réseau, dans lequel un autre nœud de bordure de service spécifique (172) de la pluralité de nœuds de bordure de service fournit une fonctionnalité de bordure de service à l'autre appareil client (53) ou à l'autre équipement client (52), dans lequel la configuration du nœud de bordure de service spécifique (171) diffère de la configuration de l'autre nœud de bordure de service spécifique (172), et dans lequel tant le nœud de bordure de service spécifique (171) que l'autre nœud de bordure de service spécifique (172) peuvent être réalisés sur le même nœud matériel.

3. Procédé selon l'une des revendications précédentes, dans lequel le centre de contrôle de l'infrastructure du fournisseur (210) du réseau de télécommunications (100) ou du point de livraison du bureau central (110) contrôle si un nœud de bordure de service de la pluralité de nœuds de bordure de service est configuré pour fournir une fonctionnalité de bordure de service soit à l'appareil client (51) ou à l'équipement client (50) ou à l'autre appareil client (53) ou à l'autre équipement client (52).

4. Procédé selon l'une des revendications précédentes, dans lequel - dans la deuxième étape - la fonction de détection de protocole (190) analyse les données du plan utilisateur de l'appareil client (51) ou de l'équipement client (50) de telle sorte qu'un certain événement de protocole - en particulier un signal de découverte - dans les données du plan utilisateur, déclenche la génération d'information de contrôle à transmettre au centre de contrôle de l'infrastructure du fournisseur (210),
dans lequel la fonction de détection de protocole (190) analyse en particulier les données du plan utilisateur de l'appareil client (51) ou de l'équipement client (50) avant l'établissement d'une connexion ou d'une session utilisateur avec l'appareil client (51) ou l'équipement client (50).

5. Procédé selon l'une des revendications précédentes, dans lequel au moins l'un des événements de protocole suivants est détecté par la fonction de détection de protocole (190) dans le cas où le protocole point à point sur ethernet, PPPoE, est utilisé entre, d'une part, l'appareil client (51) ou l'équipement client (50), et, d'autre part, le réseau de télécommunications (100) ou le point de livraison du bureau central (110) :
-- l'existence, en tant que partie des données du plan utilisateur, d'une ou plusieurs trames ethernet ayant un ethertype PPPoE de phase de découverte, en particulier ayant une valeur de 0x8863, en particulier une trame PADI, trame d'initiation de découverte active PPPoE, et/ou une trame PADR, demande de découverte active PPPoE,
-- l'existence, en tant que partie des données du plan utilisateur, d'un événement protocole de contrôle de liaison, LCP, spécifique.

6. Procédé selon l'une des revendications précédentes, dans lequel au moins l'un des événements de protocole suivants est détecté par la fonction de détection de protocole (190) dans le cas où le protocole internet version 4, IPv4, ou le protocole internet version 6, IPv6, est utilisé entre, d'une part, l'appareil client (51) ou l'équipement client (50), et, d'autre part, le réseau de télécommunications (100) ou le point de livraison du bureau central (110) :
-- l'existence, en tant que partie des données du plan utilisateur, d'un ou plusieurs messages de découverte DHCP protocole de configuration dynamique d'hôte, DHCP,
-- l'existence, en tant que partie des données du plan utilisateur, d'un ou plusieurs messages de requête DHCP protocole de configuration dynamique d'hôte, DHCP.

7. Système pour un fonctionnement amélioré d'un réseau de télécommunications (100), le réseau de télécommunications (100) étant exploité en tant que réseau multi-opérateur ou réseau multi-fournisseur, et comprenant un point de livraison du bureau central (110) et/ou un centre de contrôle de l'infrastructure du fournisseur (210),
dans lequel le système comprend en outre un autre réseau de télécommunications (400) et/ou un réseau d'accès à large bande correspondant (420),
dans lequel le point de livraison du bureau central (110) et/ou le centre de contrôle de l'infrastructure du fournisseur (210) est adapté pour agir ou être utilisé en tant que partenaire wholebuy de l'autre réseau de télécommunications (400) et/ou du réseau d'accès à large bande correspondant (420) via ou en utilisant une interface wholebuy entre les deux partenaires, dans lequel le réseau ou l'opérateur de réseau fournissant les services de réseau d'accès est considéré comme le partenaire de gros, tandis que le réseau ou l'opérateur de réseau fournissant les autres services de communication à ses clients et achetant les services de réseau d'accès au nom de ses clients est considéré comme le partenaire wholebuy, le point de livraison du bureau central (110) et/ou le centre de contrôle de l'infrastructure du fournisseur (210) fournissant au moins un service de communication à un appareil client (51) ou équipement client (50), l'appareil client (51) ou l'équipement client (50) étant connecté ou lié au point de livraison du bureau central (110) et/ou au centre de contrôle de l'infrastructure du fournisseur (210) via l'autre réseau de télécommunications (400) et/ou via le réseau d'accès à large bande correspondant (420), dans lequel l'interface wholebuy est une interface A10, dans lequel, en particulier, l'interface wholebuy est une interface A10-ASP, fournisseur de services d'accès,
dans lequel le réseau de télécommunications (100) ou le point de livraison du bureau central (110) comprend en outre une fonction de détection de protocole (190),
dans lequel le système, afin de fournir le au moins un service de communication à l'appareil client (51) ou à l'équipement client (50), est configuré de telle sorte que :
-- les données du plan utilisateur, transmises par l'appareil client (51) ou l'équipement client (50), sont reçues par le point de livraison du bureau central (110) et/ou le centre de contrôle de l'infrastructure du fournisseur (210), les données du plan utilisateur étant transmises via l'interface wholebuy entre, d'une part, le point de livraison du bureau central (110) et/ou le centre de contrôle de l'infrastructure du fournisseur (210), et, d'autre part, l'autre réseau de télécommunications (400) et/ou le réseau d'accès à large bande correspondant (420),
-- la fonction de détection de protocole (190) analyse les données du plan utilisateur de l'appareil client (51) ou de l'équipement client (50), et détermine s'il faut générer et/ou génère une information de contrôle à transmettre au centre de contrôle de l'infrastructure du fournisseur (210),
dans lequel le réseau de télécommunications (100) ou le point de livraison du bureau central (110) comprend une pluralité de nœuds de bordure de service, dans lequel un nœud de bordure de service spécifique (171) de la pluralité de nœuds de bordure de service fournit une fonctionnalité de bordure de service à l'appareil client (51) ou à l'équipement client (50), dans lequel la configuration du nœud de bordure de service spécifique (171) est adaptée pour être modifiée, sous le contrôle du centre de contrôle de l'infrastructure du fournisseur (210), et en fonction de l'information de contrôle générée par la fonction de détection de protocole (190).

8. Programme comprenant un code de programme lisible par ordinateur qui, lorsqu'il est exécuté sur un ordinateur et/ou sur un point de livraison du bureau central (110) et/ou sur un centre de contrôle de l'infrastructure du fournisseur (210), ou en partie sur un point de livraison du bureau central (110) et/ou en partie sur un centre de contrôle de l'infrastructure du fournisseur (210), amène l'ordinateur et/ou le point de livraison du bureau central (110) et/ou le centre de contrôle de l'infrastructure du fournisseur (210) à exécuter un procédé selon l'une des revendications 1 à 7.

9. Support lisible par ordinateur comprenant des instructions qui, lorsqu'elles sont exécutées sur un ordinateur et/ou sur un point de livraison du bureau central (110) et/ou sur un centre de contrôle de l'infrastructure du fournisseur (210), ou en partie sur un point de livraison du bureau central (110) et/ou en partie sur un centre de contrôle de l'infrastructure du fournisseur (210), amènent l'ordinateur et/ou le point de livraison du bureau central (110) et/ou le centre de contrôle de l'infrastructure du fournisseur (210) à exécuter un procédé selon l'une des revendications 1 à 7.
